# EUROPÄISCHE PATENTANMELDUNG

(11) **EP 2 148 111 A2**
(43) Veröffentlichungstag der Anmeldung: **27.01.2010**
(21) Anmeldenummer: 09164706.5
(22) Anmeldetag: 07.07.2009
(51) Int. Cl.: F16F 9/32, F16F 9/49

(54) **Schwingungsdämpfer mit amplitudenabhängiger Dämpfkraft**

(30) Priorität: 23.07.2008 DE 102008040643
(71) Anmelder: ZF Friedrichshafen AG, 88038 Friedrichshafen (DE)
(72) Erfinder: Sahlmüller, Armin, 97529, Sulzheim (DE); Hammer, Thomas, 97653, Bischofsheim (DE)

(57) **Zusammenfassung**

Schwingungsdämpfer (1) mit amplitudenabhängiger Dämpfkraft, umfassend einen mit Dämpfmedium gefüllten Zylinder (3), in dem eine Kolbenstange (5), von einer Kolbenstangenführung (13) radial positioniert, mit einem Kolben (7) axial beweglich angeordnet ist, wobei der Kolben (7) den Zylinder (3) in zwei Arbeitsräume unterteilt (9,11), mit einem Ventilring (27), der auf der Kolbenstange reibkraftbehaftet gleitend gelagert ist und einen Anschlussöffnung (51) zwischen dem Arbeitsraum (9) und einem weiteren Raum (11) des Schwingungsdämpfers wegabhängig steuert, wobei die Anschlussöffnung mit einem Fluidenweg (53) gekoppelt ist, der beide Arbeitsräume über eine zweite Anschlussöffnung (57) miteinander verbindet und der Fluidenweg von einem den Zylinder zumindest auf einem Längenabschnitt einschließenden Hüllrohr (55) und der Außenmantelfläche des Zylinders (3) gebildet wird und das von der Kolbenstange verdrängte Dämpfmediumvolumen von einem Ausgleichsraum (17) aufgenommen wird, wobei der Fluidenweg über einen Kanal (63) mit dem Ausgleichsraum verbunden und im Kanalverlauf ein gasdurchlässiges aber dämpfmediumundurchlässiges Filterelement (65) angeordnet ist.

## Beschreibung

Die Erfindung betrifft einen Schwingungsdämpfer mit amplitudenabhängiger Dämpfkraft gemäß dem Oberbegriff von Patentanspruch 1.

Aus der DE 10 2006 054 257 A1 ist ein Schwingungsdämpfer mit amplitudenabhängiger Dämpfkraft bekannt, in dessen kolbenstangenseitigem Arbeitsraum eine Ventilhülse angeordnet ist, in der ein Ventilring auf einer Kolbenstange axial verschiebbar gelagert ist. Die Ventilhülse verfügt endseitig über einen Boden und einen Deckel, so dass zwei Arbeitskammern begrenzt werden. Radial außerhalb eines Zylinders ist ein Hüllrohr angeordnet, das mit der äußeren Mantelfläche des Zylinders einen Fluidenweg zwischen dem kolbenstangenseitigen und einem kolbenstangenfernen Arbeitsraum des vollständig mit Dämpfmedium gefüllten Zylinders bildet.

Bei der Montage und der Befüllung des Zylinders mit Dämpfmedium kann nicht vollständig verhindert werden, dass sich insbesondere in den Arbeitskammern der Ventilhülse Luftbläschen sammeln, die den Dämpfkraftaufbau und damit die gesamte Dämpfkraftcharakteristik negativ beeinflussen.

Eine an sich bekannte Methode besteht darin, dass man die Montage in einem Ölbad vornimmt. Die Teilevielzahl und der konstruktive Aufbau eines Schwingungsdämpfers gemäß der DE 10 2006 054 257 A1 lassen ein derartiges Montageprinzip jedoch nicht zu.

Aus der DE 29 05 928 A1, Fig. 4, ist ein Schwingungsdämpfer bekannt, dessen kolbenstangenseitiger Arbeitsraum über einen Raum mit der Bezugsziffer 23 in einer Kolbenstangenführung mit einem Ausgleichsraum verbunden ist. Zwischen dem Raum 23 und dem Ausgleichsraum ist ein Ring aus Sintermetall angeordnet, der Luftaber keine Flüssigkeiten durchströmen lässt. Über diese Filterfunktion des Sinterrings kann Dämpfmedium aus dem Zylinder in den Ausgleichsraum entweichen, so dass nach wenigen Hubbewegungen die eingeschlossene Luftmenge aus dem Zylinder in den Ausgleichsraum abgeführt wird. Die Ringgeometrie des Sinterbauteils erfordert aber eine zweiteilige Bauweise der Kolbenstangenführung, da sich ansonsten der Sinterring nicht montieren lässt. Eine zweiteilige Bauform verschlechtert bzw. erschwert die Zentrierfunktion für die Zuordnung des Zylinders zu einem äußeren Behälterrohr.

Ein weiterer Nachteil dieser Konstruktion besteht darin, dass das im Zylinder eingeschlossene Luftvolumen durch einen Ringspalt zwischen der Kolbenstange und einer Führungsbuchse strömen muss, um den Sinterfilter zu erreichen. Der Ringspalt ist radial jedoch so schmal dimensioniert, dass sich nur ein sehr dünner Ölfilm auf der Kolbenstangenoberfläche bilden kann.

Die DE 31 32 434 A1 beschreibt einen Schwingungsdämpfer mit einem Sinterfilter, der stirnseitig als Ringelement oder als zylindrischer Stopfen in der Kolbenstangenführung angeordnet ist. Dem Sinterfilter ist ein Abluftkanal nachgeordnet, der im Ausgleichsraum mündet.

Eine einfache Übertragung eines Sinterfilters z. B. aus der DE 31 32 434 A1 in eine Kolbenstangenführung der DE 10 2006 054 257 A1 lässt sich nur sehr schwer realisieren, da zwischen dem Deckel der Ventilhülse und der Kolbenstangenführung eine Voröffnungsscheibe verspannt ist, die nur einen vergleichsweise kleinen Querschnitt aufweist. Ein sehr großer Anteil der in Richtung des kolbenstangenseitigen Arbeitraums wird von einer Voröffnungsscheibe abgedeckt, so dass ein dort angeordneter Sinterfilter nicht sinnvoll verwendbar wäre.

Die Aufgabe der vorliegenden Erfindung besteht darin, für einen Schwingungsdämpfer mit amplitudenabhängiger Dämpfkraft gemäß der Bauart der DE 10 2006 054 257 A1 eine Entlüftung der Arbeitsräume/Arbeitskammern im Zylinder zu erreichen.

Erfindungsgemäß wird die Aufgabe dadurch gelöst, dass der Fluidenweg über einen Kanal mit dem Ausgleichsraum verbunden ist, wobei im Kanalverlauf ein gasdurchlässiges aber dämpfmediumundurchlässiges Filterelement angeordnet ist.

Der große Vorteil der Erfindung besteht darin, dass das Dämpfmedium durch die Anordnung des Filterelements im Fluidenweg mit einem reduzierten Druckniveau am Filterelement ansteht. Wenn das Dämpfmedium aus dem kolbenstangenseitigen Arbeitsraum in den Fluidenweg verdrängt wird, dann wurde die amplitudenselektive Dämpfkrafteinrichtung, nämlich die vom Ventilring geschaltete Anschlussöffnung bereits durchströmt. Selbst wenn das Filterelement für das Dämpfmedium relativ durchlässig wäre, würde das Filterelement keinen Einfluss auf die Dämpfkraftcharakteristik ausüben.

In weiterer vorteilhafter Ausgestaltung verläuft der Kanal innerhalb der Kolbenstangenführung.

Dabei weist die Kolbenstangenführung einen Raum zur Aufnahme einer Kolbenstangendichtung auf, an den der Kanal angeschlossen ist, wobei der Raum wiederum eine Auslassöffnung an den Ausgleichsraum aufweist.

Gemäß einem vorteilhaften Unteranspruch stützt sich das Filterelement an einem Trennsteg zwischen dem Raum für die Kolbenstangendichtung und dem kolbenstangenseitigen Arbeitsraum ab. Sollte sich das Filterelement aus der bestimmungsgemäßen Position lösen, so wäre eine Ablagerung innerhalb der Arbeitsräume im Zylinder ausgeschlossen.

Dabei ist vorgesehen, dass das Filterelement von einem ringförmigen Befestigungselement innerhalb des Kanals in seiner Position gesichert wird.

Bei einer Alternatiwariante wird der Fluidenweg endseitig von dem Filterelement begrenzt, wobei eine dem Fluidenweg abgewandte Fläche des Filterelements mit dem Ausgleichsraum verbunden ist. Diese Konstruktion ermöglicht die Abfuhr der Lufteinschlüsse auf dem kürzesten Weg in den Ausgleichsraum, so dass ein Umweg über die Kolbenstangenführung entfällt.

Das Filterelement stützt sich axial an einer Stirnfläche der Kolbenstangenführung ab und wird vom Betriebsdruck innerhalb des Fluidenwegs in dieser Position gehalten.

Um eine möglichst große Übertrittsfläche zu erreichen, weist das Filterelement eine ringförmige Kontur auf.

Zur Vermeidung von nennenswerten Dämpfmediumleckagen trägt das Filterelement eine Dichtung, die den Fluidenweg vom Ausgleichsraum trennt.

Für einen möglichst ungehinderten Durchlass der Lufteinschlüsse weist das Filterelement stirnseitig in Abströmrichtung in den Ausgleichsraum mindestens eine Nut auf.

Für die Bildung einer Nut zur Fixierung der Dichtung weist das Filterelement im Halbschnitt einen u-förmigen Querschnitt auf.

Das Hüllrohr zentriert sich radial am Filterelement und übernimmt damit eine übliche Funktion der Kolbenstangenführung.

Die Stirnfläche an der Kolbenstange zur axialen Abstützung des Filterelements weist eine kleinere radiale Ausdehnung auf als das Filterelement, sodass ein Spalt zwischen einem axialen Überstand des Hüllrohres und der Kolbenstangenführung vorliegt. Dieser Spalt dient als Verbindungsweg zwischen dem Filterelement und dem Ausgleichsraum.

Anhand der folgenden Figurenbeschreibung soll die Erfindung näher erläutert werden.

### Es zeigt:

- Fig. 1: Schwingungsdämpfer mit Filterelement in Kolbenstangenführung
- Fig. 2: Detaildarstellung zur Fig. 1
- Fig. 3: Schwingungsdämpfer mit ringförmigem Filterelement am Fluidenweg
- Fig. 4: Detaildarstellung zur Fig. 3
- Fig. 5: Ringförmiges Filterelement aus Fig. 3 als Einzelteil

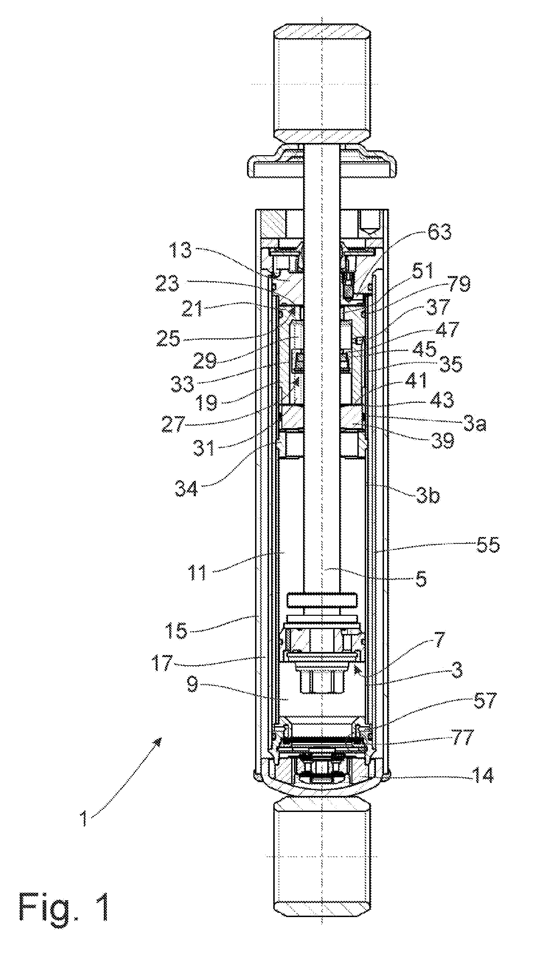

Die Figur 1 zeigt einen Schwingungsdämpfer 1, der einen Zylinder 3 aufweist, in dem eine Kolbenstange 5 mit einem Kolben 7 axial beweglich gelagert ist. Der Kolben 7 unterteilt den Zylinder 3 in einen kolbenstangenfernen und einen kolbenstangenseitigen Arbeitsraum 9; 11, wobei eine Kolbenstangenführung 13 den kolbenstangenseitigen Arbeitsraum 11 und ein Bodenventil 14 den Zylinder 3 endseitig verschließen.

Der Zylinder 3 wird von einem Behälterrohr 15 umschlossen, wobei ein dadurch bestimmter teilweise mit Dämpfmedium und teilweise mit Luft gefüllter Ausgleichsraum 17 das Volumen der ein- und ausfahrenden Kolbenstange 5 kompensiert.

Im kolbenstangenseitigen Arbeitsraum 11 ist eine Ventilhülse 19 angeordnet, deren Boden 21 über eine Drosselscheibe 23 mittelbar an einer in Richtung des Arbeitsraums 11 weisenden Stirnfläche 25 der Kolbenstangenführung 13 anliegt. Innerhalb der Ventilhülse 19 ist ein Ventilring 27 auf der Mantelfläche der Kolbenstange 5 axial gleitend gelagert, so dass innerhalb der Ventilhülse zwei Arbeitskammern 29; 31 vorliegen. Zwischen den beiden Arbeitskammern 29; 31 besteht eine Strömungsverbindung 33, die z. B. von einer Längsnut in der Innenwandung der Ventilhülse 13 gebildet wird.

Die Ventilhülse 19 wird radial von der Innenwandung des Zylinders 3 geführt, der mindestens im Bereich des Hubwegs des Ventilrings 27, in diesem Fall auf der Gesamtlänge der Ventilhülse 19 im Durchmesser verkleinert ist. Der Zylinder 3 ist in Axialrichtung mehrteilig ausgeführt und zwischen den Längenabschnitten 3a; 3b ist ein Adapterring 34 angeordnet, der die beiden Längenabschnitte 3a; 3b zueinander zentriert und eine axiale Verspannung zwischen dem Bodenventil 14 und der Kolbenstangenführung 13 gewährleistet. Eine Außendurchmesserreduzierung der Ventilhülse 19 in der Form mindestens einer Axialnut 35 bildet einen Axialkanal zwischen dem kolbenstangenseitigen Arbeitsraum 11 und der zwischen dem Ventilring 27 und dem Boden 21 vorliegenden Arbeitskammer 29 innerhalb der Ventilhülse 19, wobei zwischen dem Axialkanal 35 und der Arbeitskammer 29 noch mindestens ein Verbindungskanal 37 besteht. Man kann auch mehrere Axialkanäle vorsehen. Die von einem Deckel 39 der Ventilhülse 19 und dem Ventilring 27 begrenzte Arbeitskammer 31 weist eine Drosselöffnung 41 zum kolbenstangenseitigen Arbeitsraum 11 auf. Die Drosselöffnung 41 wird von mindestens einer zwischen dem Deckel und der Ventilhülse angeordneten Drosselscheibe 43 gebildet.

Der Ventilring 27 verfügt über einen auf der Kolbenstange gleitenden Reibring 45 und einen den Reibring mit einer Mantelfläche außenseitig umschließenden Dichtring 47, wobei sich der Dichtring 47 in Grenzen radial zum Reibring 45 bewegen kann.

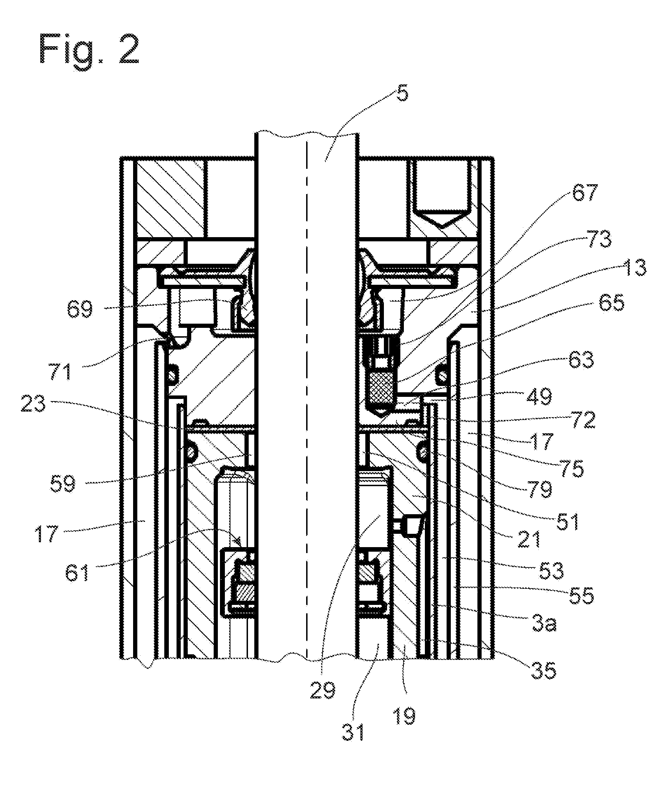

In dieser Variante der Erfindung ist in der Kolbenstangenführung 13 eine erste Anschlussöffnung 49 ausgeführt, die über die Voröffnungsscheibe 23 und einen Anschlusskanal 51 im Boden 21 der Ventilhülse 19 an die Arbeitskammern 29; 31 der Ventilhülse 19 mit einem Fluidenweg 53 gekoppelt, siehe Fig. 2. Der Fluidenweg 53 ist zum Ausgleichsraum 17 abgedichtet und wird von einer Außenmantelfläche des Zylinder 3a; 3b und einem zumindest auf einem Längenabschnitt umschließenden Hüllrohr 55 gebildet. Über eine zweite Anschlussöffnung 57 knapp oberhalb des Bodenventils 14 sind damit die beiden Arbeitsräume 9; 11 miteinander verbunden.

Der Anschlusskanal 51 wird von einer Durchgangsöffnung 59 im Boden 21 der Ventilhülse 19 gebildet, durch die auch die Kolbenstange 5 verläuft, wobei der Ventilring 27 die Durchgangsöffnung 59 mit seiner oberen Stirnfläche 61 verschließt.

Der Fluidenweg 53 ist in dieser Variante mittelbar über einen Kanal 63 mit dem Ausgleichsraum 17 verbunden, wobei im Kanalverlauf ein gasdurchlässiges aber dämpfmediumundurchlässiges Filterelement 65 angeordnet ist. Das Filterelement 65 wird bevorzugt von einem Sinterkörper gebildet. Wie insbesondere in der Fig. 2 erkennbar ist, verläuft der Kanal 63 innerhalb der Kolbenstangenführung 13. Die Kolbenstangenführung weist einen Raum 67 zur Aufnahme einer Kolbenstangendichtung 69 auf. Dieser Raum 67 ist an den Kanal 63 mit dem Filterelement 65 angeschlossen, wobei eine Auslassöffnung 71 den Raum 67 mit dem Ausgleichsraum 17 verbindet. Der Kanal 63 ist hydraulisch dem Fluidenweg 53 parallel geschaltet. An einem Absatz zur radialen Positionierung des Zylinders 3 an der Kolbenstangenführung 13 ist eine Nut 72 eingearbeitet, die sowohl mit dem Kanal 63 wie auch mit der ersten Anschlussöffnung 49 verbunden ist.

Zur Fixierung des Filterelements 65 innerhalb des Kanals 63 dient ein ringförmiges Befestigungselement 73. Andererseits stützt sich das Filterelement 65 an einem Trennsteg 75 zwischen dem Raum 67 für die Kolbenstangendichtung 69 und dem kolbenstangenseitigen Arbeitsraum 11 ab.

Bei einer Kolbenstangenbewegung in Ausfahrrichtung gleitet der Ventilring 27 innerhalb der Ventilhülse 19 aufgrund der Reibkraft zur Kolbenstange 5 synchron mit.

Aus dem kolbenstangenseitigen Arbeitsraum 11 wird Dämpfmedium über den Axialkanal 35 zwischen der Ventilhülse 19 und der Innenwandung des Zylinders 3 in die Ventilhülse 19 verdrängt. Ein kleinerer Volumenanteil fließt über den Deckel 39 und die Drosselöffnung 41 der Drosselscheibe 43 in die untere Arbeitskammer 31, wobei über den Axialkanal 33 zwischen den Arbeitskammern 29; 31 stets ein Druckausgleich erfolgt. Die bei der Kolbenstangenausfahrbewegung erzeugte Dämpfkraft wird von der Voröffnungsscheibe 23 zwischen dem Boden 21 und der Kolbenstangenführung 13 bestimmt. Das dabei verdrängte Dämpfmedium fließt über den Fluidenweg 53, die zweite Anschlussöffnung 57 und einem Rückschlagventil 77 in den kolbenstangenfernen Arbeitsraum 9.

Nach einer bestimmten Hublänge der Kolbenstangenführung kommt der Ventilring 27 innenseitig am Boden 21 der Ventilhülse 19 zur Anlage und dichtet den Anschlusskanal 51 zur ersten Anschlussöffnung 49 und den Verbindungskanal 37 ab. Der Axialkanal 35 zwischen der Zylinderwandung und der Ventilhülse wird durch eine Dichtung 79 endseitig verschlossen, so dass das dort befindliche Dämpfmedium nicht weiterfließen kann. Zusätzlich dient die Dichtung 79 auch der axialen Fixierung der Ventilhülse 19 innerhalb des Zylinders 3. Ab dieser Hublage wird die Dämpfkraft von Dämpfventilen, z. B. im Kolben 7, bestimmt. Das Volumen in den Arbeitskammern 29; 31 der Ventilhülse 19 wird bei der Kolbenstangenausfahrbewegung über die Drosselöffnung 41 komprimiert, so dass eine zusätzliche hydraulische Schließkraft auf den Ventilring 27 wirkt.

Wenn der Ventilring 27 zum Anschlusskanal 51 eine Durchlassposition einnimmt, dann kann in dem Dämpfmedium gelöste Luft über die Drosselscheibe 23 in Richtung des Fluidenwegs 53 strömen und dabei den Kanal 63 innerhalb der Kolbenstangenführung 13 erreichen. Der Betriebsdruck innerhalb des beschriebenen Strömungswegs sorgt dafür, dass die Luft durch das Filterelement 65 in den Raum 67 für die Kolbenstangendichtung 69 und dann weiter über die Auslassöffnung 71 in den Ausgleichsraum 17 abgeschieden werden kann. Versuche haben gezeigt, dass dieser Strömungsweg zuverlässig die bei der Montage des Schwingungsdämpfers in den Zylinder aufgenommene Luft sehr rasch in den Ausgleichsraum fördert.

Bei einer Kolbenstangeneinfahrbewegung wird der Ventilring 27 aufgrund der Reibkraft zwischen dem Reibring 45 und der Kolbenstange 5 von dem Boden 21 abgehoben und gibt den Anschlusskanal 51 wieder frei. Eine weitere Schließfunktion des Ventilrings 27 ist nicht notwendig. Gleichzeit wird das Dämpfmedium im kolbenstangenfernen Arbeitsraum 9 komprimiert, wodurch das Rückschlagventil 77 vom Druck in Schließrichtung vorgespannt wird, so dass keine Verbindung zum Fluidenweg 53 besteht. Das Dämpfmediumvolumen entsprechend dem verdrängten Volumen der Kolbenstange fließt durch das Bodenventil 14 in den Ausgleichsraum 17. Das restliche Dämpfmediumvolumen wird durch das Kolbenventil in den kolbenstangenseitigen Arbeitsraum 11 verdrängt. Prinzipiell kann man auf das Rückschlagventil 77 verzichten, da das Kolbenstangenvolumen unabhängig davon durch das Bodenventil 14 fließen muss, da der kolbenstangenseitige Arbeitsraum 11 nicht das gesamte Dämpfmediumvolumen des kolbenstangenfernen Arbeitsraums aufnehmen kann. Mit dem Rückschlagventil 77 wird das Dämpfmedium aus dem kolbenstangenfernen Arbeitsraum 9 durch das Kolbenventil gezwungen, wodurch eine größere Dämpfkraft erzeugt wird, die man bei bestimmten Anwendungen erreichen will.

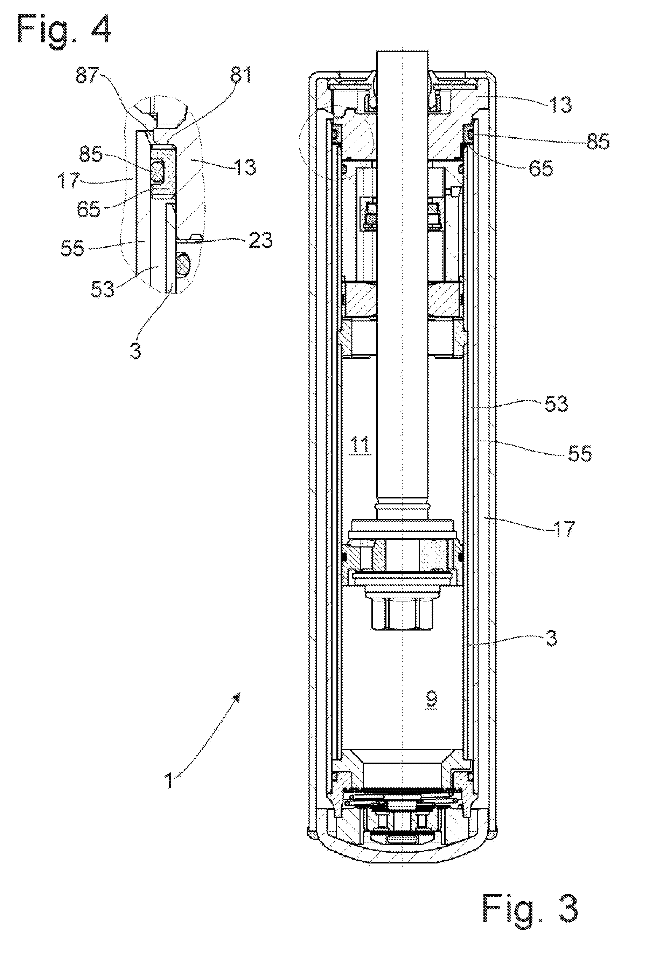

Die Figur 3 zeigt einen Schwingungsdämpfer 1 mit amplitudenabhängiger Dämpfkraft bei der der Fluidenweg 53 endseitig von dem Filterelement 65 begrenzt wird und eine dem Fluidenweg 53 abgewandte Seite des Filterelements 65 mit dem Ausgleichsraum 17 verbunden ist. Hinsichtlich der Funktionsweise des Schwingungsdämpfers 1 bestehen keine funktionalen Unterschiede im Vergleich zur Variante nach Fig. 1.

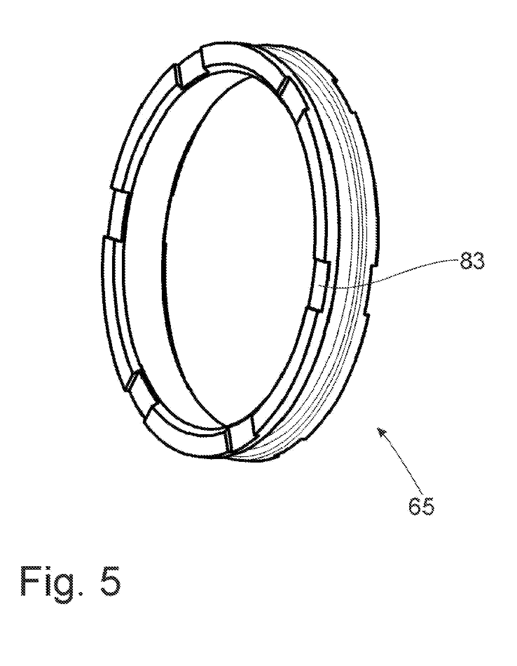

Wie insbesondere aus der Detaildarstellung nach Fig. 4 erkennbar ist, stützt sich das Filterelement 65 axial an einer Stirnfläche 81 der Kolbenstangenführung 13 ab. Das Filterelement 65 weist, wie mit der Fig. 5 verdeutlicht werden soll, eine ringförmige Kontur auf. Dadurch steht für die Entlüftung des Zylinders eine vergleichsweise große Oberfläche zur Verfügung. Des Weiteren gibt es keine endseitigen Bereiche des Fluidenwegs 53, die nicht an den Ausgleichsraum angeschlossen sind. Mindestens eine abströmseitige Nut 83 im Filterelement 65 stellt einen großen Querschnitt zum Ausgleichsraum 17 dar, wobei beide Deckseiten des Filterelements 65 mit einer Mehrzahl von Nuten ausgeführt sind, so dass für das Filterelement 65 keine bevorzugte Einbaulage besteht.

Das Filterelement 65 trägt eine Dichtung 85, die den Fluidenweg vom Ausgleichsraum trennt. Mit seinem im Halbschnitt u-förmigen Querschnitt verfügt das Filterelement über eine in Richtung des Hüllrohrs 55 weisende Ringnut zur Aufnahme der Dichtung.

Des Weiteren zentriert sich das Hüllrohr 55 radial am Filterelement 65, wodurch das Filterelement 65 eine wesentliche Aufgabe der Kolbenstangenführung 13 übernimmt. Die Stirnfläche 81 an der Kolbenstangenführung 13 zur axialen Abstützung des Filterelements 65 weist eine kleinere radiale Ausdehnung auf als das Filterelement 65 selbst, so dass am Außendurchmesserbereich des Filterelements 65 ein radialer Überstand zur Kolbenstangenführung besteht, der zusammen mit dem Hüllrohr 55 einen Spalt 87 bildet. Dieser Spalt 87 dient als Auslassöffnung des Filterelements 65 an den Ausgleichsraum 17. Der große Vorteil der Variante nach den Fig. 3 bis 5 im Vergleich zur Ausführung nach den Fig. 1 und 2 besteht darin, dass das Filterelement 65 als Beilegeteil zur Kolbenstangenführung 13 sehr einfach montiert werden kann.

## Patentansprüche

1. Schwingungsdämpfer (1) mit amplitudenabhängiger Dämpfkraft, umfassend einen mit Dämpfmedium gefüllten Zylinder (3), in dem eine Kolbenstange (5), von einer Kolbenstangenführung (13) radial positioniert, mit einem Kolben (7) axial beweglich angeordnet ist, wobei der Kolben (7) den Zylinder (3) in zwei Arbeitsräume (9;11) unterteilt, mit einem Ventilring (27), der auf der Kolbenstange (5) reibkraftbehaftet gleitend gelagert ist und einen Anschlussöffnung (51) zwischen dem Arbeitsraum (9) und einem weiteren Raum (11) des Schwingungsdämpfers wegabhängig steuert, wobei die Anschlussöffnung (51) mit einem Fluidenweg (53) gekoppelt ist, der beide Arbeitsräume (9;11) über eine zweite Anschlussöffnung (57) miteinander verbindet und der Fluidenweg (53) von einem den Zylinder (3) zumindest auf einem Längenabschnitt einschließenden Hüllrohr (55) und der Außenmantelfläche des Zylinders (3) gebildet wird und das von der Kolbenstange (5) verdrängte Dämpfmediumvolumen von einem Ausgleichsraum (17) aufgenommen wird,
**dadurch gekennzeichnet,**
**dass** der Fluidenweg (53) über einen Kanal (63) mit dem Ausgleichsraum (17) verbunden ist, wobei im Kanalverlauf ein gasdurchlässiges aber dämpfmediumundurchlässiges Filterelement (65) angeordnet ist.

2. Schwingungsdämpfer nach Anspruch 1,
**dadurch gekennzeichnet,**
**dass** der Kanal (63) innerhalb der Kolbenstangenführung (13) verläuft.

3. Schwingungsdämpfer nach Anspruch 2,
**dadurch gekennzeichnet,**
**dass** die Kolbenstangenführung (13) einen Raum (67) zur Aufnahme einer Kolbenstangendichtung (69) aufweist, an den der Kanal (63) angeschlossen ist, wobei der Raum (67) wiederum eine Auslassöffnung (71) an den Ausgleichsraum (17) aufweist.

4. Schwingungsdämpfer nach Anspruch 1,
**dadurch gekennzeichnet,**
**dass** das sich Filterelement (65) an einem Trennsteg (75) zwischen dem Raum (67) für die Kolbenstangendichtung (69) und dem kolbenstangenseitigen Arbeitsraum (11) abstützt.

5. Schwingungsdämpfer nach Anspruch 1,
**dadurch gekennzeichnet,**
**dass** das Filterelement (65) von einem ringförmigen Befestigungselement (73) innerhalb des Kanals (63) in seiner Position gesichert wird.

6. Schwingungsdämpfers nach Anspruch 1,
**dadurch gekennzeichnet,**
**dass** der Fluidenweg (53) endseitig von dem Filterelement (65) begrenzt wird, wobei eine dem Fluidenweg (53) abgewandte Fläche des Filterelements (65) mit dem Ausgleichsraum (17) verbunden ist.

7. Schwingungsdämpfer nach Anspruch 6,
**dadurch gekennzeichnet,**
**dass** sich das Filterelement (65) axial an einer Stirnfläche (81) der Kolbenstangenführung (13) abstützt.

8. Schwingungsdämpfer nach Anspruch 6,
**dadurch gekennzeichnet,**
**dass** das Filterelement (65) eine ringförmige Kontur aufweist.

9. Schwingungsdämpfer nach Anspruch 8,
**dadurch gekennzeichnet,**
**dass** das Filterelement (65) eine Dichtung (85) trägt, die den Fluidenweg (53) vom Ausgleichsraum (17) trennt.

10. Schwingungsdämpfer nach Anspruch 6,
**dadurch gekennzeichnet,**
**dass** das Filterelement (65) stirnseitig in Abströmrichtung in den Ausgleichsraum (17) mindestens eine Nut (83) aufweist.

11. Schwingungsdämpfer nach Anspruch 9,
**dadurch gekennzeichnet,**
**dass** das Filterelement (65) im Halbschnitt einen u-förmigen Querschnitt aufweist.

12. Schwingungsdämpfer nach Anspruch 8,
**dadurch gekennzeichnet,**
**dass** sich das Hüllrohr (55) radial am Filterelement (65) zentriert.

13. Schwingungsdämpfer nach den Ansprüchen 7 und 12,
**dadurch gekennzeichnet,**
**dass** die Stirnfläche (81) an der Kolbenstangenführung (13) zur axialen Abstützung des Filterelements (65) eine kleinere radiale Ausdehnung aufweist als das Filterelement (65), sodass ein Spalt (87) zwischen einem axialen Überstand des Hüllrohres (55) und der Kolbenstangenführung (13) vorliegt.
